# FASCICULE DE BREVET EUROPEEN

(11) **EP 3 585 653 B1**
(45) Date de publication et mention de la délivrance du brevet: **20.07.2022**
(21) Numéro de dépôt: 18706820.0
(22) Date de dépôt: 13.02.2018
(51) Int. Cl.: B60R 13/04, B60J 5/04

(54) **ELEMENT DE PROTECTION D'UNE PORTE ET AGENCEMENT D'UN TEL ELEMENT SUR UN VEHICULE**
SCHUTZELEMENT FÜR EINE TÜR UND ANORDNUNG SOLCH EINES ELEMENTS AN EINEM FAHRZEUG
PROTECTIVE ELEMENT FOR A DOOR AND ARRANGEMENT OF SUCH AN ELEMENT ON A VEHICLE

(30) Priorité: 24.02.2017 FR 1770180
(43) Date de publication de la demande: 01.01.2020
(73) Titulaire: Renault s.a.s, 92100 Boulogne Billancourt (FR)
(72) Inventeur: AHDADA, Kahlid, 78280 Guyancourt (FR); LABET, Gregory, 28120 Cernay (FR); COULLEBAUD, Christophe, 77450 Conde Saint Libiaire (FR)
(74) Mandataire: Renault Group
(86) Numéro de dépôt international: PCT/FR2018/050346
(87) Numéro de publication internationale: WO 2018/154216

(56) Documents cités:
- FR-A1- 2 370 620
- JP-A- 2015 063 199
- JP-A- 2015 071 398
- JP-A- 2016 097 763
- JP-U- H0 496 526

## Description

L'invention est du domaine des véhicules, notamment des automobiles.

L'invention concerne un élément de protection d'une porte ainsi qu'un agencement d'un tel élément sur un véhicule afin d'en éviter tout risque de corrosion du fait de l'architecture même de la porte et/ou de la structure de caisse.

L'évolution des véhicules tend aujourd'hui à concevoir des ouvrants, par exemple de type porte battante, qui viennent latéralement à recouvrement d'un bavolet, comme cela est écrit dans le document JP 2015 063 199A. Une telle conception permet de venir disposer au plus bas du véhicule un joint d'antisalissure entre la porte et un bavolet du véhicule. Cela permet de protéger le bavolet des salissures issues du roulage du véhicule.

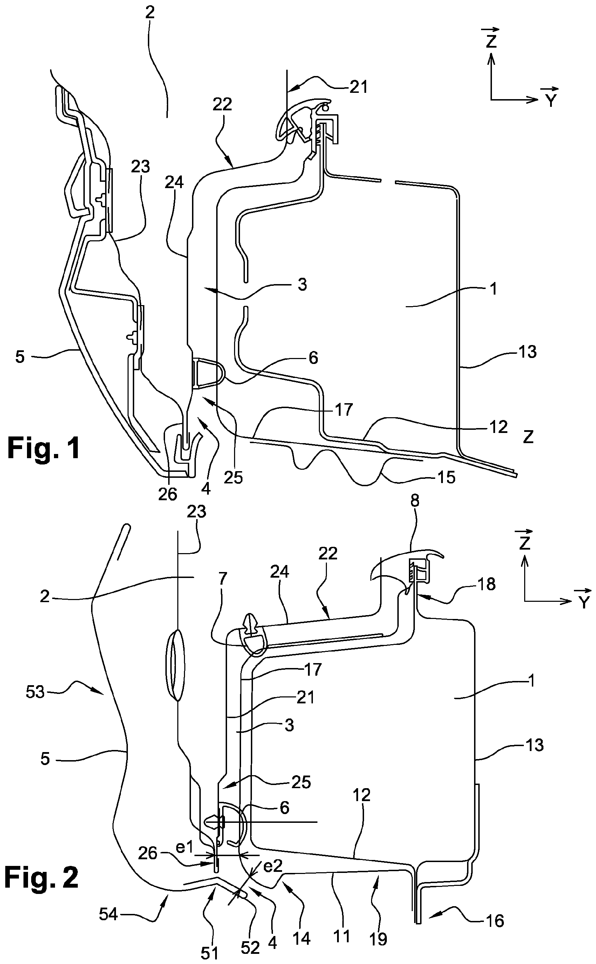

La figure 1 représente un mode de réalisation connu d'un véhicule comportant au moins une porte latérale et une structure de caisse sur laquelle est montée de manière articulée la porte 2 latérale, la structure de caisse comprenant un bavolet 1, la porte dans une position de fermeture venant à recouvrement éloigné dudit bavolet afin de délimiter un volume 3 d'étanchéité entre le bavolet et le côté intérieur 21 de la porte. Le volume 3 d'étanchéité comprend en partie inférieure un joint 6 antisalissure qui pour des raisons de fixation est disposé sur le caisson 22 de porte, verticalement à proximité du serti 26 inférieur de porte. La zone inférieure 25 de porte est alors soumise aux remontées de gravillons par projection au travers d'une voie 4 mettant en communication le volume 3 d'étanchéité avec l'extérieur. Il a même été relevé la présence de gravillons emprisonnés dans le joint antisalissure, ce qui rendait ce dernier hautement abrasif pour la peinture du bavolet. La conception actuelle tend à détériorer le joint antisalissure, mais aussi à agresser le bas de porte et le bavolet qui deviennent alors vulnérable à la corrosion. A moins de recourir à un traitement particulier de la structure de porte, notamment par l'ajout d'une couche de protection appropriée sur le bas de porte, ce qui le dégraderait qualitativement, l'aspect qualitatif du véhicule est dégradé, ce qui nécessite des couts de réparation en peinture et de garantie associés.

En outre, il a été relevé que le joint antisalissure était du fait de sa localisation à proximité immédiate de la voie 4, directement exposé aux agressions extérieures, ce qui nécessite un remplacement régulier. Par temps froid, le volume 3 d'étanchéité situé en dessous du joint antisalissure peut être obstrué par de la neige de sorte que l'ouverture de la porte peut engendrer une dégradation du joint antisalissure.

L'invention a pour but de proposer un moyen de protection adapté à réduire la dégradation du bas de porte et du joint antisalissure de manière simple et peu couteuse.

A cette fin, il est proposé un élément de protection pour un ouvrant destiné à être monté de manière articulée sur une structure de caisse d'un véhicule automobile.

Plus particulièrement, l'élément de protection de l'invention comprend une paroi principale destinée à venir à recouvrement d'un panneau extérieur de porte sur lequel il est monté de manière réversible, et une paroi d'extrémité inférieure présentant un bord incliné libre conformé afin de s'étendre au-dessous de la structure de caisse afin de créer avec cette dernière une barrière de protection d'une zone inférieure de porte contenant un élément d'étanchéité contre des projections de gravillons.

Un tel élément de protection conçu selon la structure de caisse permet tout du moins de réduire les projections de gravillons qui détériorent à la fois le bas de porte et les éléments d'étanchéité se trouvant à proximité.

Selon l'invention, l'élément de protection comprend également les caractéristiques suivantes
- la paroi d'extrémité inférieure est conçue afin de s'étendre de manière sensiblement perpendiculaire à un serti inférieur de porte ; l'élément de protection formant ainsi une barrière efficace s'opposant à la projection de gravillon contre la zone d'assemblage du panneau extérieur au caisson de porte ;
- la paroi d'extrémité inférieure comprend une nervure longitudinale de rigidification définissant au niveau d'une face extérieure une ligne de fuite, une telle nervure étant réalisée par moulage de l'élément de protection ; la ligne de fuite de section transversale sensiblement en V inversé vise à éviter les dispersions des projections sur la porte ;
- il comprend, au niveau de la nervure de rigidification, un moyen de fixation de type à ergots ou pions d'assemblage, rendant apte l'assemblage réversible de l'élément de protection au serti inférieur de porte ; un tel assemblage permet d'annuler toute vibration de la partie d'extrémité inférieure de l'élément de protection, les ergots ou pions d'assemblage pouvant par exemple être disposés de manière linéairement alternée afin de pouvoir venir en prise en différents points de contact avec le serti de porte.

Il est également proposé un agencement d'un élément de protection avec une porte latérale montée de manière articulée sur une structure de caisse de véhicule, la structure de caisse comprenant un bavolet, la porte comportant un caisson de porte venant à recouvrement éloigné dudit bavolet afin de délimiter avec ce dernier un volume d'étanchéité.

L'agencement est remarquable en ce que l'élément de protection comprend les caractéristiques susmentionnées, de telle sorte que le bord libre incliné s'étend au-dessous du bavolet afin de créer avec ce dernier une voie de communication entre le volume d'étanchéité et l'extérieur, une telle voie s'étendant longitudinalement au véhicule et selon une inclinaison transversale comprise entre 45° et 90° par rapport à un axe vertical ; une telle orientation de la voie de communication empêche une remontée verticale des projections vers le volume d'étanchéité, ce dernier s'en trouve d'autant protégé.

Selon l'invention, l'agencement peut comprendre les caractéristiques suivantes prises séparément ou en combinaison entre elles :
- l'écart entre le bavolet et l'élément de protection est inférieur à l'écart entre le bavolet et le caisson de porte en position de fermeture ; cela permet de réduire d'autant le risque d'endommagement du bas de porte ainsi que toute détérioration irréversible du joint antisalissure ;
- le bord libre incliné de l'élément de protection comprend notamment une composante verticale, et en ce que ledit bavolet comprend une protubérance s'étendant en partie dans un plan sensiblement perpendiculaire au bord libre incliné ; cela permet de créer une barrière s'opposant au déplacement transversaux des éléments projetées contre le bavolet lorsque le véhicule est en mouvement ;
- la protubérance est une projection de la paroi inférieure du bavolet s'étendant en saillie vers le bas hors du reste de la paroi inférieure du bavolet, ce qui permet avantageusement d'abaisser localement le bord extérieur du bavolet afin de masquer le serti inférieur de bavolet ;

- le bavolet est réalisé par l'assemblage d'une doublure intérieure de caisse et d'un côté de caisse formant un corps creux à l'intérieur duquel est disposé une pièce de renfort, la protubérance étant réalisée par emboutissage dudit côté de caisse, l'extrémité inférieure de la partie structurelle de la porte formant un serti inférieur de porte s'étend approximativement verticalement et/ou de manière sensiblement parallèle à une paroi d'extrémité latérale du bavolet ; une telle architecture permet d'amener la partie structurelle du bas de porte sensiblement au même niveau que la paroi inférieure du bavolet de sorte que ce dernier est masqué par la porte en position de fermeture ;
- l'écart entre le caisson de porte et le bavolet comprend un joint antisalissure fixé au caisson de porte ou au bavolet ; ce qui tend à protéger la quasi-totalité de la partie d'extrémité latérale du bavolet et du bas de porte des salissures ;
- un élément d'étanchéité du type d'un joint antisalissure ayant une partie tubulaire venant notamment en appui directement contre le serti inférieur de porte et/ou l'élément de protection ; une telle conception permet de créer une étanchéité de qualité au niveau du jeu séparant la porte de la structure de caisse ;
- le bavolet comprend un créneau inversé comportant une portion approximativement plane s'étendant transversalement entre la protubérance et un serti inférieur du bavolet ; ce qui permet avantageusement de canaliser les projections sur le bavolet dans une zone délimitée pouvant être protégée par une couche d'un revêtement de protection approprié.

Quelques buts, caractéristiques et avantages de l'invention, apparaîtront à la lecture de la description suivante, donnée uniquement à titre d'exemple non limitatif, et faite en référence à la figure 2 qui est une représentation simplifiée d'une partie latérale d'un véhicule selon l'invention, vue en coupe transversale.

La description détaillée s'effectue par rapport à un référentiel lié au véhicule et pour lequel l'axe X est un axe longitudinal du véhicule orienté vers l'arrière, l'axe Y est un axe transversal du véhicule orienté vers la gauche et l'axe Z est un axe vertical orienté vers le haut.

Le véhicule de la figure 2 représente une porte et un bavolet qui reprennent certains éléments de conception identiques à ceux de la figure 1. Ces éléments identiques portent les mêmes signes de référence afin d'en facilite la compréhension.

Sur la figure 2, seule une partie inférieure et latérale d'un véhicule est représenté selon une vue en coupe dans un plan d'axes Y-Z. La représentation montre ainsi un bas de porte latérale représentée dans sa position de fermeture et un bavolet formant une partie d'une structure de caisse. La porte est montée de manière articulée sur la structure de caisse de telle sorte qu'en position de fermeture, la porte vient à recouvrement éloigné dudit bavolet en ce sens qu'un écart el ayant une composante d'axe Y délimite un volume 3 d'étanchéité entre le bavolet et un côté intérieur 21 de la porte.

Le volume 3 d'étanchéité est apte à recevoir au moins un joint d'étanchéité choisi parmi un joint antisalissure 6 et un joint d'étanchéité tubulaire 7, 8. Il est important de respecter un écart prédéterminé entre la porte fermée et la structure de caisse afin de garantir à la fois une fermeture de la porte sous un effort de fermeture calibré et une étanchéité de la porte au niveau de l'ouverture de porte délimitée par la structure de caisse, sans détérioration de chacun des joints mis en compression.

Une double barrière d'étanchéité est créée par les joints 7 et 8 d'étanchéité, l'une étant réalisée par le joint 7 d'étanchéité disposé entre le caisson 24 de porte et un bord supérieur du bavolet 1, l'autre par le joint 8 monté sur l'embrasure de porte délimité en partie par l'embrasure 18 de porte, cette dernière étant délimitée par des bords sertis des pièces du bavolet.

L'écart el permet de respecter les normes de conception associées à cette double problématique afin de disposer un joint antisalissure 6 au niveau d'une partie inférieure de la porte, approximativement à proximité d'un serti 26 de porte. L'écart el étant supérieur à la taille moyenne d'un gravillon, à savoir 8mm, la partie structurelle 22 de la porte qui se compose notamment de bas 25 de porte et du serti 26 de porte, mais aussi le joint d'antisalissure 6 doivent être protégés car fortement soumis à la protection de gravillon lors du fonctionnement du véhicule.

A cette fin, le véhicule comprend un élément 5 de protection de la partie structurelle 22 de la porte qui est conformée, comme on le verra plus en détails dans ce qui suit, afin de réduire localement l'écart entre le bavolet 1 et la porte 2 dans sa position de fermeture.

L'élément 5 de protection est préférentiellement réalisé par moulage d'une matière plastique et comprend une paroi principale 53 prolongé par une paroi d'extrémité inférieure 54.

L'élément 5 de protection est de préférence conformé de manière à s'étendre localement au-dessous du bavolet 1 afin de créer une barrière de protection. Compte tenu de l'écart entre l'élément 5 de protection et le bavolet 1, il est alors réalisé une voie 4 de communication qui est différente de celles connues entre le volume 3 d'étanchéité et l'extérieur du véhicule. La voie 4 de communication est remarquable en ce qu'elle s'étend longitudinalement selon une inclinaison vers le bas par rapport à un plan Y-Z, notamment selon un angle d'inclinaison compris entre 45° et 90° par rapport à l'axe Z et longitudinalement au véhicule

Préférentiellement, la voie 4 de communication est inclinée vers le bas par rapport à un plan Y-Z selon un angle d'inclinaison qui peut être approximativement compris entre 80° et 90° par rapport à l'axe Z.

Préférentiellement encore, la voie 4 de communication est inclinée vers le bas par rapport à un plan Y-Z selon un angle d'inclinaison qui peut être approximativement de 85° par rapport à l'axe Z.

Ledit moyen de protection 5 peut être un élément de protection qui est rapporté et monté de manière réversible sur le panneau extérieur 23 de la porte. Le matériau plastique utilisé à la fabrication de l'élément de protection lui confère une résistance aux projections de gravillon. L'élément de protection est rapporté sur la porte de telle sorte qu'il est disposé à recouvrement de la partie inférieure du panneau extérieur 23 de la porte 2. Il peut être également conçu afin de protéger le bas de porte contre les chocs de faible intensité rencontrés lors d'une ouverture de porte contre un obstacle.

L'élément 5 de protection comprend une paroi principale 53 destinée à venir à recouvrement d'un panneau extérieur 23 de porte sur lequel il est monté de manière réversible ce qui rend son démontage possible. En position de fermeture de la porte 2 équipée de l'élément 5 de protection, la paroi principale 53 s'étend dans un plan Z-X. A cet effet, une face intérieure de la paroi principale 53 peut comprendre un moyen de fixation par exemple de type à agrafe qui est conformé par moulage sur l'élément 5 de protection selon un point de réception prévu à cet effet dans le panneau extérieur 23 de la porte.

Au prolongement de la paroi principale 53, l'élément 5 de protection comprend une paroi d'extrémité inférieure 54 présentant un bord incliné 52 libre, qui s'étend ici dans un plan sensiblement perpendiculaire à la paroi principale 53. En position de fermeture de la porte 2 équipée de l'élément 5 de protection, la paroi d'extrémité inférieure 54 s'étend dans un plan Y-X. La paroi 54 est conformée afin de s'étendre au-dessous de la structure de caisse afin de créer avec cette dernière, une barrière de protection visant à protéger à la fois la zone inférieure 25 de porte contenant le joint antisalissure 6 et la paroi verticale extérieure du bavolet 1.

Afin de créer la voie 4 de communication précédemment décrite, l'extrémité libre inférieure 52 de l'élément 5 de protection est conçue de manière particulière en ce sens qu'elle comprend notamment une composante transversale d'axe Y destinée à venir à superposition de la structure de caisse lorsque la porte est en position de fermeture.

Selon un mode préféré de réalisation, le bavolet 1 peut comprendre une protubérance s'étendant linéairement le long de l'axe X, au niveau d'un bord latéral inférieur du bavolet 1. Une telle protubérance est conçue selon ledit moyen de protection de telle sorte qu'un écart e2 entre l'extrémité libre inférieure de l'élément de protection et le bavolet 1 sous lequel cette extrémité libre peut s'étendre transversalement, reste sensiblement constant le long du véhicule.

L'écart e2 définit la dimension intérieure de la voie 4 de communication est inférieur à l'écart el, et est préférentiellement inférieur à 8mm afin d'interdire un passage de gravillons au travers de la voie 4.

Pour contribuer encore plus à la réduction de l'écart entre la porte et la structure de caisse, cette dernière comprend la protubérance 14 qui peut être une projection de la paroi inférieure du bavolet en saillie vers le bas hors d'une portion inférieure 11 du bavolet. La protubérance 14 présente selon une section transversale une portion courbée prolongée par une rampe inclinée vers le haut afin de rejoindre la portion inférieure 11 plane. La rampe définit une barrière inclinée qui s'étend dans un plan sensiblement perpendiculaire à la voie 4.

L'inclinaison de la voie 4 de communication est réalisée selon une conformation particulière de l'extrémité libre inférieure 52, laquelle comprend une composante d'axe vertical Z qui est destinée à venir à superposition d'une portion courbée de la protubérance 14.

La paroi d'extrémité inférieure 54 de l'élément 5 de protection comprend un bord incliné libre 52 qui s'étend au regard de tout ou partie de la protubérance 14. Ici le bord incliné libre 52 s'étend transversalement au regard de la portion courbée de la protubérance 14. Dans une variante de réalisation, le recouvrement par le dessous de l'élément de protection est tel que le bord incliné libre 52 s'étend transversalement au regard de la rampe inclinée prolongeant la portion courbée de la protubérance 14.

La protubérance 14 du bavolet est réalisée dans le côté de caisse 17. Le bavolet 1 réalisé par l'assemblage d'une doublure intérieure 13 de caisse et d'un côté de caisse 17 formant un corps creux à l'intérieur duquel est disposé une pièce de renfort 12. Le côté de caisse 17 est une pièce rendue visible depuis l'extérieur du véhicule. La protubérance 14 peut être réalisée par emboutissage dudit côté de caisse 17.

L'assemblage d'au moins la doublure intérieure 13 de caisse, du côté de caisse 17 et de la pièce de renfort 12, définit une tôle 16 de rive sensiblement verticale. Le bavolet 1 comprend un créneau 19 inversé qui est latéralement borné par la protubérance 14 et la tôle 16 de rive.

Le créneau 19 inversé peut avoir une portion 11 approximativement plane, s'étendant dans un plan X-Y.

La paroi d'extrémité inférieure 54 de l'élément 5 de protection s'étend de manière sensiblement perpendiculaire à un serti 26 inférieur de porte formée par l'assemblage d'un caisson 24 et d'un panneau extérieur 23 de porte 2, par sertissage et/ou soudage par exemple.

L'élément 5 de protection peut comprendre une nervure de rigidification 54, laquelle s'étend linéairement le long de la paroi d'extrémité inférieure 54. Préférentiellement, la nervure de rigidification 54 présente une section sensiblement en V inversé, dont le sommet est disposé à proximité du serti 26 de porte.

La face extérieure de la paroi d'extrémité inférieure 54 est concave et définit une ligne de fuite sensiblement longitudinale. Le caractère concave de la paroi d'extrémité inférieure 54 permet avantageusement de créer un guide destiné à canaliser les projections de gravillons de sorte que ceux-ci ne remontent que partiellement vers le côté extérieur de la porte.

La nervure de rigidification 51 comprend sur sa face intérieure, un moyen de fixation (non représenté) qui peut être une série de pions et/ou d'ergots disposés en quinconce de part et d'autre du serti 26 inférieur de porte.

L'écart e1 entre le caisson 24 de porte et le bavolet 1 permet l'intégration d'un joint antisalissure 6. L'écart el respecte les contraintes d'intégration d'un tel joint et est supérieur à l'écart e2 définit entre le bord incliné libre 52 de l'élément de protection et le bavolet 1. Une telle restriction vise à rendre plus étroit la voie 4 de communication.

La porte 2 comprend une partie structurelle 22 formée d'un caisson 24 et d'un panneau extérieur 23 qui sont assemblé mutuellement l'un à l'autre par un serti 26 inférieur de porte. Cette dernière peut s'étendre verticalement et/ou de manière sensiblement parallèle au côté de caisse 17.

L'agencement de l'élément 5 de protection sur la porte permet une disposition améliorée du joint antisalissure 6. Ce dernier peut être disposé au niveau de la zone inférieure 25 de porte, à proximité immédiate du serti 26 de porte, au-dessus de cette dernière pour des raisons de fixation par clippage.

Selon le mode de réalisation de la figure 2, le joint antisalissure 6 est directement fixé à la partie structurelle 22 de porte. Il pourrait toutefois être possible d'abaisser encore la position relative du joint antisalissure 6 avec l'élément 5 de protection. En fixation en effet ce joint antisalissure 6 sur le bavolet 1, notamment par clippage au travers d'ouverture dédiées réalisées dans le côté de caisse 17, le joint antisalissure 6 peut venir en contact contre le jeu séparant l'élément de protection 5 du serti 26 de porte. Cela permet de maintenir étanche la zone située entre l'élément 5 de protection et le panneau extérieur 23.

L'élément 5 de protection ainsi que son agencement sur une porte permet de former de manière simple et peu couteuse une barrière de protection de la structure 22 de porte, laquelle est métallique, et du joint 6 antisalissure. Ce dernier est ainsi disposé dans un volume d'étanchéité dont le cloisonnement est amélioré, tout du moins au regard des projections de gravillons.

## Revendications

1. Elément (5) de protection pour un ouvrant destiné à être monté de manière articulée sur une structure de caisse d'un véhicule automobile, l'élément (5) de protection comprenant une paroi principale (53) destinée à venir à recouvrement d'un panneau extérieur (23) de porte sur lequel il est monté de manière réversible, et une paroi d'extrémité inférieure (54) présentant un bord incliné (52) libre conformé afin de s'étendre au-dessous de la structure de caisse afin de créer avec cette dernière une barrière de protection d'une zone inférieure (25) de porte contenant un élément d'étanchéité (6) contre des projections de gravillons, la paroi d'extrémité inférieure (54) étant conçue afin de s'étendre de manière sensiblement perpendiculaire à un serti (26) inférieur de porte,
**caractérisé en ce que** la paroi d'extrémité inférieure (54) comprend une nervure (51) longitudinale de rigidification définissant au niveau d'une face extérieure une ligne de fuite, une telle nervure (51) étant réalisée par moulage de l'élément (5) de protection, et **en ce qu'**il comprend, au niveau de la nervure de rigidification (51), un moyen de fixation de type à ergots ou pions d'assemblage, rendant apte l'assemblage réversible de l'élément (5) de protection au serti (26) inférieur de porte.

2. Agencement d'un élément de protection avec une porte latérale (2) montée de manière articulée sur une structure de caisse de véhicule, la structure de caisse comprenant un bavolet (1), la porte comportant un caisson (24) de porte venant à recouvrement éloigné dudit bavolet afin de délimiter avec ce dernier un volume (3) d'étanchéité, **caractérisé en ce que** l'élément (5) de protection est selon la revendication 1, de telle sorte que le bord libre incliné (52) s'étend au-dessous du bavolet (1) afin de créer avec ce dernier une voie (4) de communication entre le volume (3) d'étanchéité et l'extérieur, une telle voie s'étendant longitudinalement au véhicule et selon une inclinaison transversale comprise entre 45° et 90° par rapport à un axe vertical.

3. Agencement selon la revendication 2, **caractérisé en ce que** l'écart (e2) entre le bavolet (1) et l'élément (5) de protection est inférieur à l'écart (e1) entre le bavolet (1) et le caisson (24) de porte en position de fermeture.

4. Agencement selon la revendication 3, **caractérisé en ce que** le bord libre incliné (52) de l'élément (5) de protection comprend notamment une composante verticale, et **en ce que** ledit bavolet (1) comprend une protubérance (14) s'étendant en partie dans un plan sensiblement perpendiculaire au bord libre incliné (52).

5. Agencement selon la revendication 4, **caractérisé en ce que** la protubérance (14) est une projection de la paroi inférieure (11) du bavolet s'étendant en saillie vers le bas hors du reste de la paroi inférieure du bavolet.

6. Agencement selon la revendication 5, **caractérisé en ce que** le bavolet (1) est réalisé par l'assemblage d'une doublure intérieure (13) de caisse et d'un côté de caisse (17) formant un corps creux à l'intérieur duquel est disposé une pièce de renfort (12), la protubérance (14) étant réalisée par emboutissage dudit côté de caisse (17), l'extrémité inférieure de la partie structurelle (22) de la porte formant un serti (26) inférieur de porte s'étend approximativement verticalement et/ou de manière sensiblement parallèle à une paroi d'extrémité latérale du bavolet (1).

7. Agencement selon l'une quelconque des revendications 3 à 6, **caractérisé en ce que** l'écart (e1) entre le caisson de porte (24) et le bavolet (1) comprend un joint antisalissure fixé au caisson (24) de porte ou au bavolet (1).

8. Agencement selon la revendication 7, **caractérisé en ce qu'**un élément d'étanchéité (6) du type d'un joint antisalissure ayant une partie tubulaire venant notamment en appui directement contre le serti (26) inférieur de porte et/ou l'élément de protection (5).

## Patentansprüche

1. Schutzelement (5) für eine Tür, die dazu bestimmt ist, gelenkig an einer Karosseriestruktur eines Kraftfahrzeugs montiert zu sein, wobei das Schutzelement (5) eine Hauptwand (53) umfasst, die dazu bestimmt ist, ein äußeres Türblatt (23) zu überdecken, an dem sie reversibel angebracht ist, und eine untere Endwand (54), die eine freie geneigte Kante (52) aufweist, die so geformt ist, dass sie sich unterhalb der Karosseriestruktur erstreckt, um mit dieser eine Barriere zum Schutz eines unteren Türbereichs (25), der ein Dichtungselement (6) enthält, gegen Steinschlag zu bilden, wobei die untere Endwand (54) so gestaltet ist, dass sie sich im Wesentlichen senkrecht zu einem unteren Türfalz (26) erstreckt,
**dadurch gekennzeichnet, dass** die untere Endwand (54) eine längsverlaufende Versteifungsrippe (51) umfasst, die im Bereich einer Außenseite eine Fluchtlinie definiert, wobei die Rippe (51) durch Formen des Schutzelements (5) ausgeführt ist, und dass es im Bereich der Versteifungsrippe (51) ein Befestigungsmittel vom Typ mit Verbindungsnasen oder -stiften umfasst, das eine reversible Verbindung des Schutzelements (5) mit dem unteren Türfalz (26) ermöglicht.

2. Anordnung eines Schutzelements mit einer Seitentür (2), die gelenkig an einer Fahrzeugkarosseriestruktur montiert ist, wobei die Karosseriestruktur einen Schweller (1) umfasst, wobei die Tür einen Türkasten (24) aufweist, der den Schweller beabstandet überdeckt, um mit diesem ein Dichtungsvolumen (3) zu begrenzen, **dadurch gekennzeichnet, dass** das Schutzelement (5) Anspruch 1 entspricht, so dass sich die freie geneigte Kante (52) unterhalb des Schwellers (1) erstreckt, um mit diesem einen Verbindungsweg (4) zwischen dem Dichtungsvolumen (3) und dem Außenbereich zu schaffen, wobei sich dieser Weg in Längsrichtung zum Fahrzeug und mit einer Querneigung zwischen 45° und 90° in Bezug auf eine vertikale Achse erstreckt.

3. Anordnung nach Anspruch 2, **dadurch gekennzeichnet, dass** in der geschlossenen Position der Abstand (e2) zwischen dem Schweller (1) und dem Schutzelement (5) kleiner als der Abstand (e1) zwischen dem Schweller (1) und dem Türkasten (24) ist.

4. Anordnung nach Anspruch 3, **dadurch gekennzeichnet, dass** die freie geneigte Kante (52) des Schutzelements (5) insbesondere eine vertikale Komponente umfasst und dass der Schweller (1) eine Ausstülpung (14) umfasst, die sich teilweise in einer Ebene erstreckt, die im Wesentlichen senkrecht zur freien geneigten Kante (52) verläuft.

5. Anordnung nach Anspruch 4, **dadurch gekennzeichnet, dass** die Ausstülpung (14) ein Vorsprung der unteren Wand (11) des Schwellers ist, der sich nach unten aus dem Rest der unteren Schwellerwand herausragend erstreckt.

6. Anordnung nach Anspruch 5, **dadurch gekennzeichnet, dass** der Schweller (1) durch Zusammenfügen einer Karosserieinnenverkleidung (13) und einer Karosserieseite (17) ausgeführt ist und einen Hohlkörper bildet, in dessen Innerem ein Verstärkungsteil (12) angeordnet ist, wobei die Ausstülpung (14) durch Tiefziehen der Karosserieseite (17) ausgeführt ist, wobei sich das untere Ende des Strukturteils (22) der Tür, das den unteren Türfalz (26) bildet, ungefähr vertikal und/oder im Wesentlichen parallel zu einer seitlichen Endwand des Schwellers (1) erstreckt.

7. Anordnung nach einem der Ansprüche 3 bis 6, **dadurch gekennzeichnet, dass** der Abstand (e1) zwischen dem Türkasten (24) und dem Schweller (1) eine am Türkasten (24) oder am Schweller (1) befestigte schmutzabweisende Dichtung umfasst.

8. Anordnung nach Anspruch 7, **dadurch gekennzeichnet, dass** ein Dichtungselement (6) vom Typ einer schmutzabweisenden Dichtung einen rohrförmigen Teil aufweist, der insbesondere direkt am unteren Türfalz (26) und/oder am Schutzelement (5) zur Anlage kommt.

## Claims

1. Protective element (5) for an opening leaf intended to be mounted in a hinged manner on a body structure of a motor vehicle, the protective element (5) comprising a main wall (53) intended to cover an outer door panel (23) on which it is mounted in a reversible manner, and a lower end wall (54) that has a free inclined edge (52) designed to extend below the body structure so as to create, with the latter, a protective barrier for a lower door region (25) containing a sealing element (6) for protecting against stone chips, the lower end wall (54) being designed to extend substantially perpendicularly to a lower door seam (26),
**characterized in that** the lower end wall (54) comprises a longitudinal stiffening rib (51) defining a deflecting line on an outer face, such a rib (51) being produced by moulding the protective element (5), and **in that** it comprises, on the stiffening rib (51), attachment means of the type with assembly spurs or pins, enabling the reversible assembly of the protective element (5) on the lower door seam (26).

2. Arrangement of a protective element on a side door (2) mounted in a hinged manner on a vehicle body structure, the body structure comprising a sill (1), the door including an inner door shell (24) covering said sill at a distance in order to delimit, with the latter, a sealing space (3), **characterized in that** the protective element (5) is an element according to Claim 1, so that the free inclined edge (52) extends below the sill (1) to create, with the latter, a communication channel (4) between the sealing space (3) and the outside, such a channel extending longitudinally to the vehicle and at a transverse incline of between 45° and 90° relative to a vertical axis.

3. Arrangement according to Claim 2, **characterized in that** the gap (e2) between the sill (1) and the protective element (5) is smaller than the gap (e1) between the sill (1) and the inner door shell (24) with the door in the closed position.

4. Arrangement according to Claim 3, **characterized in that** the inclined free edge (52) of the protective element (5) particularly comprises a vertical component, and **in that** said sill (1) comprises a protuberance (14) extending partially in a plane substantially perpendicular to the inclined free edge (52).

5. Arrangement according to Claim 4, **characterized in that** the protuberance (14) is a projection from the lower wall (11) of the sill extending projecting downwards outside of the rest of the lower wall of the sill.

6. Arrangement according to Claim 5, **characterized in that** the sill (1) is produced by assembling an inner body panel (13) and a body side (17) forming a hollow body inside which is arranged a reinforcing part (12), the protuberance (14) being produced by press-forming said body side (17), the lower end of the structural part (22) of the door forming a lower door seam (26) that extends approximately vertically and/or substantially parallel to a side end wall of the sill (1).

7. Arrangement according to any one of Claims 3 to 6, **characterized in that** the gap (e1) between the inner door shell (24) and the sill (1) comprises a dirt seal attached to the inner door shell (24) or to the sill (1).

8. Arrangement according to Claim 7, **characterized in that** a sealing element (6) of the dirt seal type having a tubular part particularly resting directly against the lower door seam (26) and/or the protective element (5).
